# EUROPEAN PATENT APPLICATION

(11) **EP 0 653 235 A1**
(43) Date of publication of application: **17.05.1995**
(21) Application number: 94307683.6
(22) Date of filing: 19.10.1994
(51) Int. Cl.: B01D 39/16, B01D 39/20, B01D 39/08

(54) **Filter**

(30) Priority: 16.11.1993 GB 9323620; 26.07.1994 GB 9414981
(71) Applicant: SCAPA GROUP PLC, Blackburn, Lancashire BB2 6AY (GB)
(72) Inventor: Sayers, Ian Christison, Ribchester, Lancashire (GB); Saunders, Thomas, Blackburn, Lancashire (GB); Allum, Andrew, Darwen, Lancashire (GB)
(74) Representative: Goodwin, Mark

(57) **Abstract**

A filter made from a sheet of partially fused polymeric particles. The partially fused polymeric particles may be located on a base structure or a reinforcing structure may be embedded therein.

## Description

The present invention relates to a filter and more particularly to a filter comprising partially fused particles.

A suitable particulate material can be partially fused by means of a high energy input to give a structure containing a multitude of interstices. When heated above their crystalline melting point, the particles do not fluidise, but adopt a viscoelastic form. The external shape of the individual particles is substantially retained so as to provide an array of contiguously dispersed neighbouring particles. Usually for the successful partial fusion of polymers ultra high molecular weight materials (UHMW) must be used, a typical molecular weight being 3 to 9 x 10⁶ g/mol. However, some materials such as polyurethane and thermoplastic polyurethane do not need to possess an ultra high molecular weight for successful particle fusion.

According to the present invention there is provided a filter comprising partially fused particles.

The particles are preferably polymeric, although other materials such as metals may be used.

For example, the partially fused particles may be provided as a coating on a base material such as a fabric. This coating may be partially fused in situ. Alternatively the partially fused particles are not provided as a coating, but in sheet form, optionally comprising a reinforcement structure embedded within the sheet.

The partially fused polymer exhibits toughness, abrasion resistance, chemical resistance, heat stability, low coefficient of friction, an easy-clean surface and hydrophobicity.

Preferred polymers for partial particle fusion include polyalkenes such as polyethylene and polypropylene, polyurethane, thermoplastic polyurethane or EPDM (ethylene propylene diene monomer). One example polymer is the Hostalon GUR (trade mark of Hoechst AG) range of UHMW polyethylene having a molecular weight of 3.2 to 8 x 10⁶ g/mol. Another example is the Goodrich product 58810 (TM) which has a shore hardness of 90.

A sheet of partially fused polymer may be prepared by evenly spreading the polymer powder into a layer of uniform thickness of typically 3 to 4 mm and then heating the polymer. The uniform polymer layer may be obtained by using a roller or blade. Alternatively the polymer powder may be moulded to the desired thickness. The layer of polymer is heated to say 230°C to 240°C for a time period in the order of 1.9 mins per mm of sheet thickness, allowing for shrinkage due to partial fusion forces. Continuous sheet production may involve distributing the powdered polymer onto a tensioned metal belt which passes through an oven where the belt is heated from above and underneath by IR heaters to facilitate partial fusion. The finished product may be mechanically treated, e.g. by grinding to give a smooth finish.

Some materials such as thermoplastic polyurethanes on being subjected to a high energy input partially fluidise and partially adopt a viscoelastic form as previously described so as to provide a partially fused product having superior toughness.

Other materials do not fluidise to a significant extent. Such sheets of solely partially fused polymeric particles will have one drawback in that each polymer particle is only bonded at its tangent. The force required to break these bonds will not be particularly great and therefore a partially fused sheet will readily shed polymeric particles when subjected to frictional or impact forces. A reinforcement structure may be embedded wholly within such materials. This may comprise fibres extending through the partially fused product. Alternatively the reinforcement may comprise a fabric such as a nonwoven fabric, a mesh fabric, a plain weave fabric or a random dispersion of chopped fibres.

Bonding or bicomponent fibres are preferred, the melting or softening point of which is greater than that of the polymeric particles. On a macro scale the fibres may be formed into yarns. The yarns may form a woven or nonwoven matrix.

An example bicomponent fibre is Danaklon ES-C (trade mark) which comprises a polyethylene core and a polypropylene sheath. The fibre has a high adhesion strength and a low bonding temperature of 135 to 145°C. An example bonding fibre is Dacron 134 (trade mark of DuPont) which is a polyethylene terephthalate fibre with a melting/softening point of 205°C. One particularly suitable fibre is polyamide 6, having a melting point of 235°C. A sheath core bicomponent fibre with a polyamide 6 sheath and polyamide 6:6 core may also be appropriate.

The permeability of the partially fused product may be improved by incorporating a blowing agent into the product during partial particle fusion or using a porous support medium (e.g. partially fused metal) to enable the partially fusible powder to be fluidised immediately prior to melt bonding.

The particles may be layered in different size fractions to produce a pyramidal porosity profile and, therefore, a permeability gradient. The partially fused sheet may be coated with fluoropolymers to give an improved wipe-clean, hydrophobic surface particularly advantageous for preventing re-wet of papermachine clothing and reducing fabric contamination. An ormocer (organically modified ceramic) coating would confer significant abrasion resistance, with back-flushing of air being employed at the point of lick-up during coating application to ensure the permeability of the structure is maintained.

A hybrid needled felt/partially fused particle surface may be formed by partially embedding polymer particles in the fibrous surface to act as a foundation for the final partially fused layer.

A further advantage of this method is the ease of addition of pigments, for example, a marking such as a bar may be incorporated to aid alignment of fabrics on machines and a logo can easily be incorporated.

## Claims

1. A filter comprising partially fused particles.

2. A filter as claimed in claim 1, wherein the said particles are polymeric.

3. A filter as claimed in claim 1 or claim 2, wherein the particles comprise a polyalkene, polyurethane or EPDM.

4. A filter as claimed in claim 1, wherein the said particles comprise a metal.

5. A filter as claimed in any preceding claim, wherein the partially fused particles are provided as a coating on a base material.

6. A filter as claimed in claim 5, wherein the base material comprises a fabric.

7. A filter as claimed in claim 1, wherein the partially fused particles are provided in sheet form.

8. A filter as claimed in claim 7, wherein a reinforcing structure is embedded within the sheet of partially fused particles.

9. A filter as claimed in claim 8, wherein the reinforcing structure comprises fibres extending through the mass of partially fused particles.

10. A filter as claimed in claim 8, wherein the reinforcing structure comprises a fabric.

11. A filter as claimed in claim 8, wherein the reinforcing structure comprises a random dispersion of chopped fibres.

12. A filter as claimed in any of claims 8 to 11, wherein the reinforcing structure comprises fibres having a melting or softening point which is greater than that of said partially fused particles.

13. A filter as claimed in any of claims 8 to 12, wherein the reinforcing structure comprises bonding or bicomponent fibres.

14. A filter as claimed in any preceding claim, wherein the partially fused particles are layered in different size fractions.

15. A filter as claimed in any preceding claim, having a fluoropolymer coating thereon.

16. A filter as claimed in any preceding claim, having an ormocer coating thereon.
